**Europäisches Patentamt**

**European Patent Office**

**Office européen des brevets**

(19)

(11) Veröffentlichungsnummer: **0 096 009**
**B1**

(12) # EUROPÄISCHE PATENTSCHRIFT

(45) Veröffentlichungstag der Patentschrift:
**25.11.87**

(51) Int. Cl.⁴: **B 23 Q 11/00, B 01 D 25/38**

(21) Anmeldenummer: **83810231.7**

(22) Anmeldetag: **02.06.83**

(54) Spänefördérer an Zerspanungsmaschine.

(30) Priorität: **02.06.82 CH 3382/82**

(43) Veröffentlichungstag der Anmeldung:
**07.12.83 Patentblatt 83/49**

(45) Bekanntmachung des Hinweises auf die Patenterteilung:
**25.11.87 Patentblatt 87/48**

(84) Benannte Vertragsstaaten:
**DE FR GB IT NL SE**

(56) Entgegenhaltungen:
**US-A-2 191 122**
**US-A-2 877 901**

(73) Patentinhaber: **Kummer Frères SA, Fabrique de
machines, Rue de la Promenade 26, CH- 2720
Tramelan (CH)**

(72) Erfinder: **Leiber, Hans- Jürgen, Chemin des
Grillons 7, CH- 2720 Tramelan (CH)**

(74) Vertreter: **Dubois, Jean René, Bovard AG
Patentanwälte VSP Optingenstrasse 16, CH- 3000
Bern 25 (CH)**

## Beschreibung

Die Erfindung geht aus von einem Späneförderer an einer Zerspanungsmaschine, mit einem Vollkastengerüst, einem im Vollkastengerüst umlaufenden endlosen Scharnierband, versehen mit Löchern zwecks Durchtritts von mit Spänen vermischtem Kühlmittel und mit Mitnehmern für die Späne, und mit einem in der unteren Krümmung des Vollkastengerüstes vorgesehenen Sieb, durch welches das Kühlmittel abfliessen kann.

Bei vielen spanabhebenden Bearbeitungsprozessen fallen grosse Mengen Späne und Kühlmittel an. In solchen Fällen wird vorzugsweise ein Späneförderer eingesetzt. Dieser hat zwei Aufgaben zu erfüllen, nämlich das Austragen der Späne aus der Maschine und das Trennen der Späne vom Kühlmittel. Meist ist der Spänetransport problemlos, dagegen führt das Trennen der Späne vom Kühlmittel, besonders wenn die Späne sehr klein sind, oft zu Schwierigkeiten. Dies kommt daher, dass das in den Späneförderer strömende und mit Spänen vermischte Kühlmittel durch ein Sieb, meist ein gelochtes Blech oder ein Spaltsiebboden, ablaufen muss. Sind nun die Späne sehr klein, so verstopft das Sieb rasch, das Kühlmittel kann nicht mehr ablaufen und überschwemmt den Späneförderer. Dieser muss dann aus der Maschine ausgebaut und das Sieb gereinigt werden, was zeitaufwendig, mühsam und eine schmutzige Arbeit ist.

Eine ähnliche Austragsvorrichtung für Späne an einer Zerspanmaschine ist in der DE-A-27 07 730 beschrieben. An einem Ende der Spanrinne, in welcher die endlose Rollenkette läuft, ist zwischen einer vorderen und einer hintern Siebplatte ein Filterelement angeordnet. Vor diesem Filterelement bildet sich in Gebrauchslage ein Kühlmittelsumpf, dessen Spiegel nur geringfügig ansteigt, auch wenn sich die Poren des Filterelementes durch feinste Späne zusetzten. Nichtsdestoweniger muss dieses Filterelement von Zeit zu Zeit ausgewechselt werden.

Der im Patentanspruch 1 definierten Erfindung lag die Aufgabe zugrunde, die beschriebenen Mängel zu beseitigen. Dies sollte durch ein technisch einfaches und arbeitstechnisch zuverlässig wirkendes Mittel erreicht werden, wobei das Sieb nicht ausgewechselt zu werden braucht.

Die Aufgabe wird bei einem Späneförderer nach dem Oberbegriff des Patentanspruches 1 dadurch gelöst, dass durch eine ausserhalb des Vollkastengerüstes angebrachte Düse, die bezogen auf die Umlaufrichtung des Scharnierbandes hin und her entlang des Siebes antreibbar ist, und durch welche das unter Druck stehende Kühlmittel gegen das Sieb in Gegenstromspülung zugeführt wird.

Mit Vorteil verläuft die Reinigungsdüse horizontal und ist an einer senkrecht verlaufenden, das Vollkastengerüst rittlings umschliessenden Gabel befestigt, die von einem pneumatischen Motor in Schwenkbewegungen versetzbar ist.

Der Erfindungsgegenstand wird nachstehend anhand der Zeichnung beispielsweise näher erläutert. Es zeigen

Fig. 1 eine schematische Seitenansicht des erfindungsgemässen Späneförderers,

Fig. 2 einen Querschnitt des Späneförderers nach der Fig. 1 entlang der Linie II-II,

Fig. 3 und 4 schemastische Darstellungen von zwei Möglichkeiten zur Druckbeaufschlagung und Bewegung der Reinigungsdüse.

Das von einem Elektromotor 4 angetriebene, endlose Scharnierband 2 ist in einem Vollkastengerüst 1 untergebracht. Das Scharnierband 2 ist mit Löchern zum Abführen von mit Spänen vermischtem Kühlmittel versehen. Am Scharnierband 2 sind Mitnehmer 3 der Späne aufgeschweisst. Die untere Krümmung 15 des Vollkastengerüstes 1 ist als Sieb 5 zum Abfliessen des Kühlmittels ausgebildet. Das Sieb 5 ist erforderlich für das Trennen des Kühlmittels von den Spänen. Das Sieb 5 kann aus einem gelochten Blech bestehen oder es kann ein Spaltsiebboden sein.

Von aussen des Vollkastengerüstes 1 ist eine Düse 6 zum Reinigen des verstopften Siebes angeordnet. Die Reinigungsdüse 6 ist entlang des Siebes 5 in Schwenkbewegung führbar. Die Reinigungsdüse 6, die horizontal verläuft, ist an einer senkrecht verlaufenden, das Vollkastengerüst 1 rittlings umschliessenden Gabel 7 befestigt. Die Gabel 7 ist von einem pneumatischen Motor 9 in Schwenkbewegungen setzbar. Durch den Schlauch 10 wird der Reinigungsdüse 6, während diese am Sieb 5 entlang schwenkt, Kühlmittel unter Druck zugeführt, wodurch das Sieb 5 nach dem Prinzip der Gegenstromspülung gereinigt wird. Die Verunreinigungen werden dabei gegen das Scharnierband 2 gespült und durch die Mitnehmer 3, ähnlich wie bei einem Kratzförderer aus der Maschine gefördert.

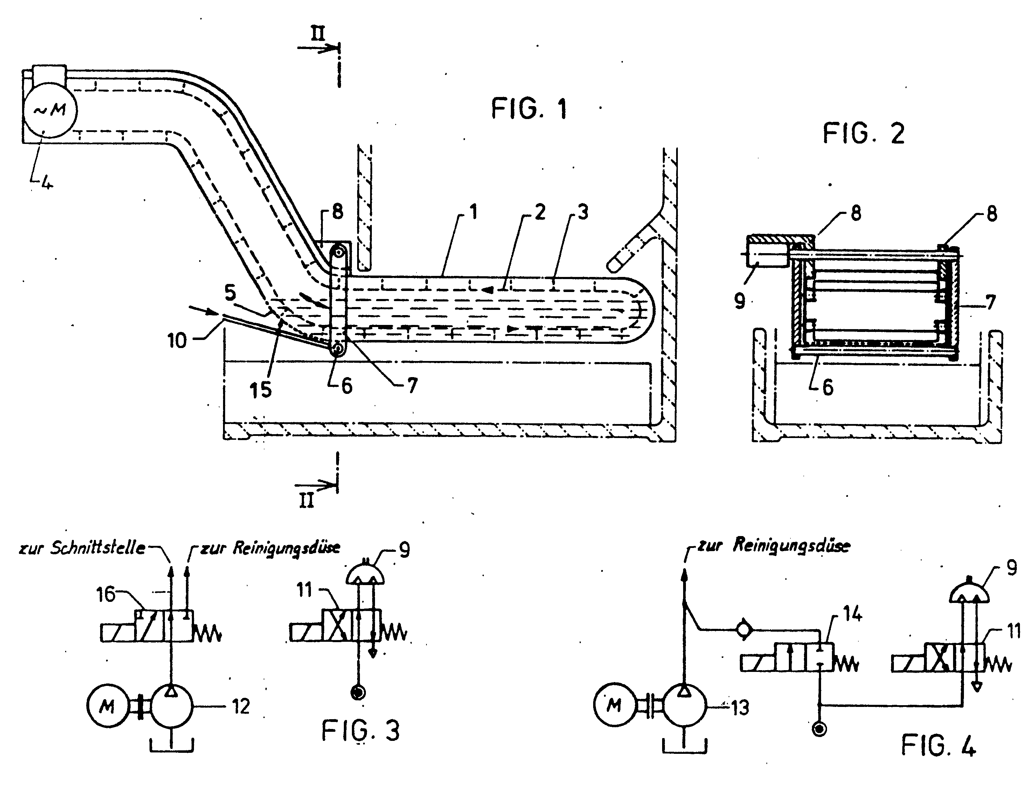

In den Fig. 3 und 4 sind in schematischer Darstellung die Möglichkeiten dargelegt, wie der Reinigungsvorgang gesteuert werden kann. Das von einer Kühlmittelpumpe 12 normalerweise zur Schnittstelle an der Zerspanungsmaschine geförderte Kühlmittel wird beim Reinigungsvorgang mit Hilfe des Ventils 16 in die Reinigungsdüse 6 umgeleitet. Gleichzeitig wird durch das Ventil 11 der pneumatische Schwenkmotor 9 in Bewegung gesetzt und damit die Reinigungsdüse 6 am Sieb 5 entlang geführt. Nach der Beendigung des Reinigungsvorganges wird das Kühlmittel durch Umsteuern des Ventils 16 wieder zur Schnittstelle geleitet.

Vorzugsweise erfolgt das Reinigen des Siebes 5 während eines End- und Beladevorganges der Werkzeugmaschine, bei welchem das Kühlmittel nicht an der Schnittstelle der Maschine benötigt wird.

Eine andere Möglichkeit für die Steuerung des Reinigungsvorganges ist in der Fig. 4 schematisch dargestellt. Das Kühlmittel wird dabei durch eine nur für die Reinigungsdüse 6 bestimmte Pumpe 13 gefördert. Ein über das Ventil 14 schaltbarer Luftstrahl (z. B. von einem nicht dargestellten Luftkompressor) verleiht dem aus der Reinigungsdüse 6 ausströmenden Kühlmittel mehr Druck und Geschwindigkeit, was die Reinigungswirkung wesentlich verbessert. Bei dieser Ausführungsform braucht das Reinigen nicht während des End- und Beladevorganges der Werkzeugmaschine ausgeführt werden.

Der Reinigungsvorgang selbst kann auf verschiedene Arten ausgelöst werden, z. B. von Hand, vollautomatisch in Abhängigkeit von der Zeit oder aber von der Höhe des im Späneförderer stehenden Kühlmittels. Auch die Gabel 7 mit der Reinigungsdüse 6 kann anstelle einer motorischen Betätigung manuell betätigt werden. Mit 8 sind Lagerstellen für die Gabel 7 bezeichnet.

Bei dem oben erwähnten Späneförderer kann das Kühlmittel von den Spänen einfach getrennt werden, weil bei der Verstopfung des Siebes die Reinigungsdüse sofort eingesetzt werden kann. Aufgrund des bekannten Prinzipes der Gegenstromspülung kann das Sieb entweder halb- oder vollautomatisch gereinigt werden.

**Patentansprüche**

1. Späneförderer an einer Zerspanungsmaschine, mit einem Vollkastengerüst (1), einem im Vollkastengerüst umlaufenden endlosen Scharnierband (2), versehen mit Löchern zwecks Durchtritts von mit Spänen vermischtem Kühlmittel und mit Mitnehmern (3) für die Späne, und mit einem in der unteren Krümmung (15) des Vollkastengerüstes (1) vorgesehenen Sieb (5), durch welches das Kühlmittel abfliessen kann, gekennzeichnet durch eine ausserhalb des Vollkastengerüstes (1) angebrachte Düse (6), die bezogen auf die Umlaufrichtung des Scharnierbandes (2) hin und her entlang des Siebes (5) antreibbar ist, und durch welche das unter Druck stehende Kühlmittel gegen das Sieb (5) in Gegenstromspülung zugeführt wird.

2. Späneförderer nach Patentanspruch 1, dadurch gekennzeichnet, dass die Reinigungsdüse (6) horizontal verläuft und an einer senkrecht verlaufenden, das Vollkastengerüst (1) rittlings umschliessenden Gabel (7) befestigt ist, die von einem pneumatischen Motor (9) in Schwenkbewegungen setzbar ist.

3. Späneförderer nach Patentanspruch 1, gekennzeichnet durch eine das Kühlmittel zur Schnittstelle an der Zerspanungsmaschine fördernde Pumpe (12) und ein Ventil (16), mittels welchem das durch die Pumpe (12) geförderte Kühlmittel zur Reinigungsdüse (6) umgeleitet wird.

4. Späneförderer nach Patentanspruch 1, gekennzeichnet durch eine zur Förderung des Kühlmittels nur für die Reinigungsdüse (6) bestimmte Pumpe (13) und ein Ventil (14) mittels welchem in das von der Pumpe (13) geförderte Kühlmittel Luft zugemischt wird.

**Claims**

1. Cuttings exhauster on a cutting machine having a whole-box frame (1), an endless slat conveyor (2) revolving in the whole-box frame, provided with holes for the purpose of passage of coolant mixed with cuttings and with entrainers (3) for the cuttings, and having a strainer (5) provided in the lower bend (15) of the whole-box frame (1), through which strainer the coolant can drain off, characterized by a jet (6) which, relative to the direction of rotation of the slat conveyor (2), is drivable back and forth along the strainer (5), and through which jet the pressurized coolant is fed against the strainer (5) in countercurrent circulation.

2. Cuttings exhauster according to patent claim 1, characterized in that the cleaning jet (6) runs horizontally and is fixed to a vertically running fork (7) straddlingly surrounding the whole-box frame (1), which fork can be set in swinging motions by a pneumatic motor (9).

3. Cuttings exhauster according to patent claim 1, characterized by a pump (12) conveying the coolant to the cutting location on the cutting machine and a valve (16) by means of which the coolant conveyed by the pump (12) is diverted to the cleaning jet (6).

4. Cuttings exhauster according to patent claim 1, characterized by a pump (13) intended for conveying the coolant only for the cleaning jet (6) and a valve (14) by means of which air is admixed into the coolant conveyed by the pump (13).

**Revendications**

1. Transporteur de copeaux pour machine-outil, avec un carénage entièrement fermé (1), un tapis-convoyeur sans fin à charnières (2), pourvu de trous pour le passage d'un produit réfrigérant mélangé aux copeaux et de taquets (3) pour les copeaux, et d'un crible (5) prévu dans la courbure inférieure (15) du carénage entièrement fermé (1), à travers lequel le produit réfrigérant peut s'écouler, caractérisé par une buse (6) aménagée à l'extérieur du carénage entièrement fermé (1), qui peut être entraînée le long du crible (5) d'un côté et de l'autre relativement au sens de rotation du tapis convoyeur à charnière (2), et à travers laquelle le produit réfrigérant se trouvant sous pression est giclé à contre-courant contre le crible (5).

2. Transporteur de copeaux selon la revendication 1, caractérisé en ce que la buse de rinçage (6) est orientée horizontalement et est fixée à une fourche (7) orientée verticalement et entourant à califourchon le carénage entièrement fermé (1), laquelle buse peut être soumise à un mouvement oscillatoire au moyen d'un moteur pneumatique (9).

3. Transporteur de copeaux selon la revendication 1, caractérisé par une pompe (12) transportant le produit réfrigérant vers la machine-outil à l'endroit où s'effectue la coupe, et une soupape (16) au moyen de laquelle le produit réfrigérant transporté par la pompe (12) est dévié vers la buse de rinçage (6).

4. Transporteur de copeaux selon la revendication 1, caractérisé par une pompe (13) pour le transport du produit réfrigérant destinée uniquement à la buse de rinçage (6) et une soupape (14) au moyen de laquelle de l'air est mélangé avec le produit réfrigérant transporté par la pompe (13).

0 096 009

FIG. 1

FIG. 2

FIG. 3

FIG. 4

zur Reinigungsdüse

zur Reinigungsdüse

zur Schnittstelle